# EUROPEAN PATENT APPLICATION

(11) **EP 3 636 709 A1**
(43) Date of publication of application: **15.04.2020**
(21) Application number: 18813176.7
(22) Date of filing: 05.06.2018
(51) Int. Cl.: C08L 21/00, B60C 1/00, C08K 3/22, C08K 3/34, C08K 9/02

(54) **RUBBER COMPOSITION, METHOD FOR PRODUCING RUBBER COMPOSITION, AND TIRE**

(30) Priority: 09.06.2017 JP 2017114650
(71) Applicant: Bridgestone Corporation, Tokyo 104-8340 (JP)
(72) Inventor: YANO, Yuzaburo, Tokyo 104-8340 (JP)
(74) Representative: Oxley, Robin John George
(86) International application number: PCT/JP2018/021585
(87) International publication number: WO 2018/225743

(57) **Abstract**

An object of the present disclosure is to provide a rubber composition having high wear resistance and being excellent in both workability and low-hysteresis loss properties. Specifically, the present disclosure provides a rubber composition comprising a rubber component and a hydrated silica, wherein: the hydrated silica contains aluminum and a surfactant.

## Description

### TECHNICAL FIELD

The present invention relates to a rubber composition, a method for manufacturing the rubber composition, and a tire.

### BACKGROUND ART

A pneumatic tire is generally required to have high capacity of simultaneously satisfying various requirements of plural, different performances. In particular, a component member of a tire such as a tread is keenly expected to achieve high wear resistance, while reducing rolling resistance. There have been quite a few trial-and-errors in the prior art in this connection because low rolling resistance or good low-hysteresis loss properties and high wear resistance are basically inconsistent with each other.

Silica has conventionally been used as a reinforcing filler in a rubber composition applied to a tread of a tire (refer to PTL 1, for example). However, an increase in a content of silica, although it generally enhances wear resistance of a tire to some extent, may possibly deteriorate rolling resistance properties of the tire. Further, an increase in the silica content may increase viscosity of unvulcanized rubber too much, thereby possibly deteriorating workability of the unvulcanized rubber.

In this regard, in order to solve the problems described above, there has been developed a technique of improving wear resistance, low-hysteresis loss properties and workability of a tire by adding aluminum to silica in a process of manufacturing the silica (refer to PTL 2, for example).
Further, in order to improve reinforcing properties of a tire, there has been developed a technique of optimizing physiochemical parameters such as a pore diameter distribution, CTAB and the like of precipitated silica (refer to PTL 3, for example).

### CITATION LIST

### Patent Literature

PTL 1: JP-A 06-248116
PTL 2: JP-A 2001-294711
PTL 3: JP-A 2007-077012

### SUMMARY

However, although the techniques of PTL 1 and PTL 2 cause an effect of improving wear resistance and an effect of improving low-hysteresis loss properties, respectively, to some extents, neither PTL 1 nor PTL 2 can improve both wear resistance and low-hysteresis loss properties of a rubber composition and decrease viscosity of unvulcanized rubber simultaneously. Therefore, there has been a demand for further improvement in this connection.
Further, there has been a demand for further improvement of the technique disclosed in PTL 3, as well, in terms of workability, low-hysteresis loss and the like, although the technique of PTL 3 improves reinforcing properties and thus enhances wear resistance of a rubber composition to some extent.

In view of this, an object of the present disclosure is to provide a rubber composition having high wear resistance and being excellent in both workability and low-hysteresis loss properties, a method for manufacturing the rubber composition, and a tire being excellent in wear resistance and low-hysteresis loss properties.

The present disclosure has been contrived in order to achieve the aforementioned object and the primary features thereof are as follows.
A rubber composition of the present disclosure is a rubber composition comprising a rubber component and a hydrated silica, wherein the hydrated silica contains aluminum and a surfactant.
It is possible to realize a rubber composition having high wear resistance and being excellent in both workability and low-hysteresis loss properties by employing the feature described above.

Further, a method for manufacturing a rubber composition of the present disclosure is a method for manufacturing a rubber composition, the method including blending a rubber component and a hydrated silica, wherein the method includes modifying the hydrated silica with aluminum and a surfactant prior to blending the rubber component and the hydrated silica.
It is possible to provide a rubber composition having high wear resistance and being excellent in both workability and low-hysteresis loss properties by employing the feature described above.

Yet further, in the method for manufacturing a rubber composition of the present disclosure, it is preferable that a surface of the hydrated silica is modified with the surfactant after the surface of the hydrated silica has been reacted and thus modified with the aluminum.
It is possible to realize high wear resistance, good workability and satisfactorily low hysteresis loss of the rubber composition in a more compatible manner than otherwise by employing the feature described above.

Yet further, in the method for manufacturing a rubber composition of the present disclosure, it is preferable that the modifying the hydrated silica with the aluminum is modifying the hydrated silica with an aluminate salt, and it is more preferable that a content of the aluminate salt is within the range of 0.1 parts by mass to 5.0 parts by mass with respect to 100 parts by mass of the hydrated silica.
It is possible to realize a rubber composition having high wear resistance and being more excellent in both workability and low-hysteresis loss properties than otherwise by employing the feature described above.

Yet further, in the method for manufacturing a rubber composition of the present disclosure, it is preferable that the surfactant is a nonionic surfactant or a cationic surfactant, and it is more preferable that a content of the surfactant is within the range of 0.05 parts by mass to 2.0 parts by mass with respect to 100 parts by mass of the hydrated silica.
It is possible to realize a rubber composition having high wear resistance and being more excellent in both workability and low-hysteresis loss properties than otherwise by employing the feature described above.

Yet further, in the method for manufacturing a rubber composition of the present disclosure, it is preferable that a ratio of the content of the aluminate salt with respect to the content of the surfactant is in the range of 0.1 to 10.0.
It is possible to realize a rubber composition having high wear resistance and being more excellent in both workability and low-hysteresis loss properties than otherwise by employing the feature described above.

Yet further, in the method for manufacturing a rubber composition of the present disclosure, it is preferable that a content of the hydrated silica is within the range of 10 parts by mass to 150 parts by mass with respect to 100 parts by mass of the rubber component.
It is possible to realize high wear resistance, good workability and satisfactorily low hysteresis loss of the rubber composition in a more compatible manner than otherwise by employing the feature described above.

A tire of the present disclosure is characterized in that it uses the rubber composition described above.
It is possible to realize a tire having high wear resistance and satisfactorily low hysteresis loss by employing the feature described above.

According to the rubber composition of the present disclosure, it is possible to provide a rubber composition having high wear resistance and being excellent in both workability and low-hysteresis loss properties, a method for manufacturing the rubber composition, and a tire being excellent in wear resistance and low-hysteresis loss properties.

### DETAILED DESCRIPTION

The present disclosure will be described in detail hereinafter according to an embodiment thereof.

### (Rubber composition)

A rubber composition of the present disclosure is a rubber composition comprising a rubber component and a hydrated silica.

### Rubber component

Type of the rubber component comprised in the rubber composition is not particularly restricted. It is preferable to use either natural rubber/diene-based synthetic rubber alone or natural rubber and diene-based synthetic rubber in combination as the rubber component in terms of obtaining satisfactorily high wear resistance of the rubber composition.
Examples of the diene-based synthetic rubber include polyisoprene rubber (IR), styrene-butadiene copolymer rubber (SBR), polybutadiene rubber (BR), and the like. Styrene-butadiene copolymer rubber (SBR) is preferable among these examples. The aforementioned examples of the diene-based synthetic rubber may be used either solely or as a blend of two or more types.

### Hydrated silica

The rubber composition of the present disclosure contains hydrated silica in addition to the rubber component.
Type of the hydrated silica is not particularly restricted. Examples of the hydrated silica include wet silica, colloidal silica, calcium silicate, aluminum silicate, and the like.
The hydrated silica is preferably wet silica and more preferably precipitated silica among these examples because such wet silica exhibits good dispersibility and thus successfully improves reinforcing properties of the rubber composition. Precipitated silica represents silica obtained by: carrying out a reaction in a reaction solution at relatively high temperature in a neutral-alkali pH range, to grow primary particles of silica, at the initial stage of the manufacturing process thereof; and then controllably shifting the pH range of the reaction solution toward the acidic side, to coagulate the primary particles.

The hydrated silica preferably has a CTAB specific surface area (cetyltrimethylammonium bromide adsorption specific surface area) in the range of 50 m²/g to 300 m²/g, although the CTAB specific surface area is not particularly restricted thereto. The larger specific surface area is the better in terms of enhancing a rubber-reinforcing effect by hydrated silica. It is possible to obtain still higher wear resistance of the rubber composition by setting the CTAB specific surface area of the hydrated silica to be 50 m²/g or larger. However, wear resistance may rather decrease and viscosity may rise because of unsatisfactory dispersibility of the hydrated silica when the CTAB specific surface area thereof is set to be 300 m²/g or larger. In this connection, a CTAB specific surface area of the hydrated silica is preferably in the range of 70 m²/g to 250 m²/g and more preferably in the range of 150 m²/g to 210 m²/g for the same reasons as described above.

A "CTAB specific surface area" of the hydrated silica represents a CTAB specific surface area value measured according to ASTM D3765-92 in the present disclosure. Specifically, a CTAB specific surface area of the hydrated silica is determined by: assuming an adsorption cross sectional area per one molecule of cetyltrimethylammonium bromide (which will be referred to as "CTAB" hereinafter) adsorbed on a surface of the hydrated silica to be 0.35 nm²; and calculating a CTAB specific surface area of the hydrated silica from an amount of CTAB adsorbed thereon.

A BET specific surface area (a specific surface area measured by the BET method) of the hydrated silica is preferably 130 m²/g or larger in the present disclosure. The larger BET specific surface area is the better in terms of rendering a surface condition of the hydrated silica advantageous for dispersion by adjusting pH of the hydrated silica. It is possible to reduce viscosity (i.e. improve workability) of the rubber composition in an unvulcanized state, thereby achieving still higher wear resistance and lower hysteresis loss, by setting the BET specific surface area to be 130 m²/g or larger. Satisfactory workability, wear resistance and low-hysteresis loss properties of the rubber composition may not be obtained when the BET specific surface area is less than 130 m²/g. A BET specific surface area of the hydrated silica is more preferably equal to or larger than 200 m²/g for the same reasons as described above.
A "BET specific surface area" represents a specific surface area determined by the BET method and can be measured according to ASTM D4820-93 in the present disclosure.

A method for manufacturing the hydrated silica is not particularly restricted and any known method for manufacturing hydrated silica can be employed as long as hydrated silica satisfying the aforementioned conditions can be obtained by the method. In this connection, it is preferable to manufacture the hydrated silica by a wet process in which pH of a reaction solution is adjusted without using a basic substance but by using an alkali metal silicate and an acidic substance, in terms of making control of pH before rinsing and pH after rinsing easy.

A content of the hydrated silica is preferably in the range of 10 parts by mass to 150 parts by mass, more preferably in the range of 30 parts by mass to 120 parts by mass, and particularly preferably in the range of 50 parts by mass to 100 parts by mass, with respect to 100 parts by mass of the rubber component. When the content of the hydrated silica is less than 10 parts by mass with respect to 100 parts by mass of the rubber component, the content is too small and may not be able to achieve a satisfactory rubber-reinforcing effect and satisfactorily high wear resistance of the rubber composition. When the content of the hydrated silica exceeds 150 parts by mass with respect to 100 parts by mass of the rubber component, dispersibility of the hydrated silica may not be satisfactory, which possibly deteriorates workability and rolling resistance properties of the rubber composition.
A method for mixing and kneading the rubber component and the hydrated silica is not particularly restricted. The rubber component and the hydrated silica can be mixed and kneaded by using, for example, an open-type kneader such as rolls, a closed-type kneader such as a Banbury mixer, or the like.

In the present disclosure, the hydrated silica is characterized in that it contains aluminum and a surfactant. Aluminum and a surfactant provided on a surface of the hydrated silica improve reactivity and dispersibility of the hydrated silica, thereby causing an effect of significantly improving reinforcing properties and dispersibility of the hydrated silica in the rubber composition. Further, since the hydrated silica has both aluminum and a surfactant thereon, a synergetic effect is obtained by the aluminum and the surfactant in combination, which effect further successfully improves wear resistance, low-hysteresis loss properties and workability of the rubber composition.

The hydrated silica contains aluminum and a surfactant as described above. Specifically, it is preferable that the hydrated silica has been modified with the aluminum and the surfactant. Modification of the hydrated silica with the aluminum and the surfactant reliably improves reinforcing properties and dispersibility of the hydrated silica, thereby successfully achieving high wear resistance, satisfactorily low hysteresis loss and good workability of the rubber composition in a more compatible manner than otherwise.
"Modification of the hydrated silica" represents providing a portion of a hydrated silica surface with aluminum and a surfactant by adhesion, substitution or a chemical reaction in the present disclosure. Accordingly, it is possible to change the reactivity of the hydrated silica surface and the coagulation force between the hydrated silica particles without changing the internal chemical structures of the hydrated silica in the present disclosure.

It is preferable that the modifying the hydrated silica with the aluminum and the surfactant is carried out prior to mixing and kneading the hydrated silica and the rubber component. It is possible to effectively modify the hydrated silica and improve dispersibility as desired, with small amounts of aluminum and a surfactant, in this case.

### Aluminum

Aluminum contained in the hydrated silica successfully improves, due to an effect thereof, dispersibility of the hydrated silica in a rubber composition.
The aluminum may be either Al simple substance or Al ion. Examples of a supply source of Al ion include an aluminum compound such as an aluminate salt (xM₂O · yAl₂O₃ · zH₂O) and the like. Among the examples, an aluminate salt is preferably used as a supply source of the aluminum in terms of achieving still better dispersibility of the hydrated silica and realizing high wear resistance, good workability and satisfactorily low hysteresis loss of the rubber composition in a more compatible manner than otherwise.

Specifically, modification of the hydrated silica with the aluminum represents reacting a surface of the hydrated silica with the aluminum such that a specific compound is formed on the hydrated silica surface.
Modification of the hydrated silica with an aluminate salt as an example of the modifying the hydrated silica with the aluminum can be carried out by adding an aluminate salt when the hydrated silica is manufactured. It is preferable that the aluminate salt is added either (i) after completion of the hydrated silica particles-generating reaction in a reaction vessel or (ii) when a cake of hydrated silica obtained by a water-rinsing process has been emulsified in a later stage of the manufacturing process. If an aluminate salt were to be added not after the completion of generation of the hydrated silica particles but in the midst of generating the hydrated silica particles, the aluminate salt would be incorporated into the hydrated silica particles, which might result in unsatisfactory formation of irregular structures at a hydrated silica surface.

A content of the aluminate salt is preferably in the range of 0.1 parts by mass to 5.0 parts by mass with respect to 100 parts by mass of the hydrated silica. An increase in the aluminate salt content, i.e. an increase in aluminum content, results in an increase in the number of irregular structures formed at a silica surface, which facilitates interactions between the silica surface and rubber molecules and thus successfully achieves high wear resistance, good workability and satisfactorily low hysteresis loss of the rubber composition in a more compatible manner than otherwise. When the content of the aluminate salt is less than 0.1 mass %, the aluminum content may be too small to form irregular structures at a silica surface in a satisfactory manner. When the content of the aluminate salt exceeds 5.0 mass %, the too large aluminum content may change crosslinking configurations of rubber and thus deteriorate wear resistance of the rubber.

### Surfactant

The surfactant contained in the hydrated silica modifies the hydrated silica, as the aforementioned aluminum does, and successfully improves dispersibility of the hydrated silica into the rubber composition.
Type of the surfactant is not particularly restricted and examples thereof applicable for use include a nonionic surfactant, a cationic surfactant, an anionic surfactant, an amphoteric surfactant, and the like. A nonionic surfactant and a cationic surfactant are preferable among the aforementioned examples because these two surfactants can easily modify hydrated silica surfaces and thus effectively improve dispersibility of the hydrated silica.

A nonionic surfactant is a surfactant having a hydrophilic group which is not ionized when the surfactant is dissolved in water. Examples of the nonionic surfactant include polyethylene glycol alkyl ether, polyethylene glycol fatty acid ester, alkyl glucoside, fatty acid alkanolamide, glycerin fatty acid ester, alkylglyceryl ether, sorbitan fatty acid ester, polyethylene glycol sorbitan fatty acid ester, saccharide fatty acid ester, and the like.

A cationic surfactant is a surfactant which becomes a plus ion when the surfactant is dissolved in water. Examples of the cationic surfactant include a primary amine salt, a secondary amine salt, a tertiary amine salt, a quaternary ammonium salt, a pyridinium salt, and the like.

Modification of the hydrated silica with the surfactant represents treating a surface of the hydrated silica with the surfactant so that the surfactant adheres to the hydrated silica (and hydrated aluminum oxide or the like) surface.
A method for modifying the hydrated silica with the surfactant is not particularly restricted and the method can be carried out, for example, by adding the surfactant in a process of manufacturing the hydrated silica.
It is preferable that the modifying the hydrated silica with the surfactant is carried out after the modifying the hydrated silica with the aluminum described above. Modifying the hydrated silica first with aluminum, which is bonded to the hydrated silica more firmly than a surfactant, and then with the surfactant ensures a good effect caused by the aluminum and thus the better synergetic effect than otherwise, thereby successfully achieving good workability, high wear resistance and satisfactorily low hysteresis loss of the rubber composition in a further more compatible manner. Good workability, high wear resistance and satisfactorily low hysteresis loss of the rubber composition can be realized even when the hydrated silica is modified with the aluminum and the surfactant at the same time or first with the surfactant and then with the aluminum. However, the best effect can be obtained in this regard when the hydrated silica is modified first with the aluminum and then with the surfactant.

The surfactant can be added in a slurrying process of dry hydrated silica. It is preferable that the surfactant is added to the hydrated silica before the hydrated silica is blended with the rubber component.
For example, the surfactant is preferably added either (i) after completion of the hydrated silica particles-generating reaction in a reaction vessel or (ii) when a cake of hydrated silica obtained by a water-rinsing process has been emulsified in a later stage of the manufacturing process or (iii) in a slurrying process of dry hydrated silica.

A content of the surfactant for use in modification of the hydrated silica is preferably in the range of 0.05 parts by mass to 2.0 parts by mass and more preferably in the range of 0.1 parts by mass to 1.6 parts by mass with respect to 100 parts by mass of the hydrated silica, because then good workability, high wear resistance and satisfactorily low hysteresis loss of the rubber composition can be achieved in a more compatible manner than otherwise. When the content of the surfactant is less than 0.05 parts by mass with respect to 100 parts by mass of the hydrated silica, the surfactant content may be too small to improve dispersibility of the hydrated silica in a satisfactory manner. When the content of the surfactant exceeds 2.0 parts by mass with respect to 100 parts by mass of the hydrated silica, the too large surfactant content may cause premature start of scorching of the rubber blend, thereby deteriorating workability of the rubber blend.

A ratio of the content of the aluminate salt with respect to the content of the surfactant (= mass of the aluminate salt thus blended/mass of the surfactant thus blended) is preferably in the range of 0.1 to 10.0. In this case, an effect caused by the aluminate salt and an effect caused by the surfactant are well balanced, whereby further better wear resistance, workability and low-hysteresis loss properties of the rubber composition than otherwise can be achieved.

### Silane coupling agent

The rubber composition of the present disclosure preferably further contains a silane coupling agent in addition to the hydrated silica, so that the effect caused by the hydrated silica, as well as the physical properties of the rubber composition such as low-hysteresis loss properties, wear resistance and the like, which physical properties are affected by the effect, further improve.

The silane coupling agent is blended preferably by a content of 1 to 20 parts by mass, more preferably by a content of 3 to 16 parts by mass, and particularly preferably by a content of 5 to 12 parts by mass, with 100 parts by mass of the hydrated silica. A good effect caused by inclusion of the hydrated silica is further improved so that the physical properties such as low-hysteresis loss properties, wear resistance and the like of the rubber composition can further improve, by blending at least 1 part by mass of the silane coupling agent with 100 parts by mass of the hydrated silica. On the other hand, a content of the silane coupling agent thus blended, exceeding 20 parts by mass with respect to 100 parts by mass of the hydrated silica, may fail to further improve the aforementioned physical properties of the rubber composition, rather meaninglessly increasing the production cost.

The silane coupling agent is preferably at least one compound selected from the group consisting of the compounds represented by following formula (I), formula (II), formula (III), formula (IV).

AₘB₃₋ₘSi-(CH₂)ₐ-S_{b}-(CH₂)ₐSiAₘB₃₋ₘ ··· (I)

[In formula (I), A represents CₙH₂ₙ₊₁O (n is an integer in the range of 1 to 3) or a chlorine atom, B represents a C₁₋₃ alkyl group, m is an integer in the range of 1 to 3, a is an integer in the range of 1 to 9, b is an integer ≥ 1, "B"s may be the same or different from each other when m = 1, and "A"s may be the same or different from each other when m = 2 or 3.]

AmB3-mSi-(CH2)c-Y ... (II)

[In formula (II), Y represents one of mercapto, vinyl, amino, glycidoxy and epoxy groups, c is an integer in the range of 0 to 9, and "A", "B" and "m" are defined as described above, respectively.]

AmB3-mSi-(CH2)a-Sb-Z ··· (III)

In formula (III), Z represents one of benzothiazolyl, N-N-dimethylthiocarbamoyl and methacryloyl groups, and "A", "B", "m", "a" and "b" are defined as described above, respectively.]

R¹ₓR²_{y}R³_{z}Si-R⁴-S-CO-R⁵ ··· (IV)

In formula (IV), R¹, having 1 to 18 carbon atoms, is selected from R⁶O-, R⁶C(=O)O-, R⁶R⁷C=NO-, R⁶R⁷NO-, R⁶R⁷N-, and -(OSiR⁶R⁷)ₙ(OSiR⁵R⁶R⁷), wherein R⁶ and R⁷ each independently represent one of C₁₋₁₈ alkyl, C₁₋₁₈ cycloalkyl, C₁₋₁₈ alkenyl, C₁₋₁₈ cycloalkenyl and C₁₋₁₈ aryl groups, and n is in the range of 0 to 10); R² represents hydrogen or a group selected from C₁₋₁₈ alkyl, C₁₋₁₈ cycloalkyl, C₁₋₁₈ alkenyl, C₁₋₁₈ cycloalkenyl and C₁₋₁₈ aryl groups; R³ represents -O(R⁸O)ₘ]_{0.5}-, wherein R⁸ is a group selected from C₁₋₁₈ alkylene and C₁₋₁₈ cycloalkylene groups and m is in the range in the range of 1 to 4; x, y and z satisfy relationships x + y + 2z = 3 and 0 ≤ x ≤ 3 and 0 ≤ y ≤ 2 and 0 ≤ z ≤ 1; R⁴ represents a group selected from C₁₋₁₈ alkylene, C₁₋₁₈ cycloalkylene, C₁₋ is cycloalkylalkylene, C₁₋₁₈ alkenylene, C₁₋₁₈ arylene, and C₁₋₁₈ aralkylene groups; and R⁵ represents a group selected from C₁₋₁₈ alkyl, C₁₋₁₈ cycloalkyl, C₁₋₁₈ alkenyl, C₁₋₁₈ cycloalkenyl, C₁₋₁₈ aryl group, and C₁₋₁₈ aralkyl group.
The aforementioned examples of the silane coupling agent may be used either solely or as a blend of two or more types.

Specific examples of the compound represented by the formula (I) include Bis(3-triethoxysilylpropyl)tetrasulfide, Bis(3-trimethoxysilylpropyl)tetrasulfide, Bis(3-methyldimethoxysilylpropyl)tetrasulfide, Bis(3-triethoxysilylethyl)tetrasulfide, Bis(3-triethoxysilylpropyl)disulfide, Bis(3-trimethoxysilylpropyl)disulfide, Bis(3-triethoxysilylpropyl)trisulfide, and the like.

Specific examples of the compound represented by the formula (II) include 3-mercaptopropyl trimethoxysilane, 3-mercaptopropyl triethoxysilane, vinyltriethoxysilane, vinyltrimethoxysilane, 3-aminopropyltriethoxysilane, 3-aminopropyltrimethoxysilane, 3-mercaptopropylmethyl dimethoxysilane, γ-glycidoxypropyl trimethoxysilane, γ-glycidoxypropylmethyl diethoxysilane, and the like. Examples of the commercially available products of the compound include the product name "VPSi363" manufactured by Evonik Degussa GmbH.

Specific examples of the compound represented by the formula (III) include 3-trimethoxysilylpropyl-N,N-dimethylcarbamoyl tetrasulfide, 3-trimethoxysilylpropyl benzothiazolyl tetrasulfide, 3-trimethoxysilylpropyl methacryloyl monosulfide, and the like.

In R², R⁵, R⁶ and R⁷ of the compound represented by the formula (IV), alkyl group thereof may be either normal or branched and examples of the alkyl group include methyl, ethyl, propyl, isopropyl, and the like; alkenyl group thereof may be either normal or branched and examples of the alkenyl group include vinyl, allyl, methanyl, and the like; examples of cycloalkyl group thereof include cyclohexyl, ethylcyclohexyl, and the like; examples of cycloalkenyl group thereof include cyclohexenyl, ethylcyclohexenyl, and the like; examples of aryl group thereof include phenyl, tolyl, and the like; and examples of aralkyl group in R⁵ include phenethyl and the like.

In R⁴ and R⁸ of the formula (IV), alkylene group thereof may be either normal or branched and examples of the alkylene group include methylene, ethylene, trimethylene, propylene, and the like; and examples of cycloalkylene group thereof include cyclohexylene, and the like. In R⁴ of the formula (IV), alkenylene group thereof may be either normal or branched and examples of the alkenylene group include vinylene, propenylene, and the like; examples of cycloalkylalkylene group thereof include cyclohexylmethylene and the like; examples of arylene group thereof include phenylene and the like; and examples of aralkylene group thereof include xylylene and the like.

In R³ of the formula (IV), examples of -[OCR⁸O)ₘ]_{0.5}- group include 1,2-ethane dioxy, 1,3-propane dioxy, 1,4-butane dioxy, 1,5-pentane dioxy, 1,6-hexane dioxy, and the like.
The compound represented by the formula (IV) can be synthesized by a method similar to the method described in JP 2001-505225. Alternatively, a commercially available product such as "NXT" (represented by the formula (IV) wherein R¹ = C₂H₅O, R⁴= C₃H₆, R⁵=C₇H₁₅, x = 3, y = 0, z = 0, i.e. 3-octanoyl thiopropyl triethoxysilane) manufactured by Momentive Performance Materials Inc. may be used as the compound. The compound represented by the formula (II) or the compound represented by the formula (IV) are preferable and a compound containing sulfur element is more preferable among the compounds represented by the formulae (I), (II), (III) or (IV).

A method for mixing and kneading the rubber component and the hydrated silica with the silane coupling agent is not particularly restricted. The rubber component and the hydrated silica can be mixed and kneaded with the silane coupling agent by using, for example, an open-type kneader such as rolls, a closed-type kneader such as a Banbury mixer, or the like.

### Other components

It is preferable that the rubber composition of the present disclosure is blended with carbon black as a reinforcing filler. A content of the carbon black is preferably equal to or less than 80 parts by mass and more preferably equal to or less than 60 parts by mass with respect to 100 parts by mass of the rubber component. The carbon black content exceeding 80 parts by mass with respect to 100 parts by mass of the rubber component may deteriorate low-hysteresis loss properties of the rubber composition.
In a case where the carbon black is added, the total content of the carbon black and the hydrated silica is preferably equal to or less than 200 parts by mass and more preferably equal to or less than 150 parts by mass with respect to 100 parts by mass of the rubber component. It is possible to realize satisfactorily low hysteresis loss and thus further decrease rolling resistance of the rubber composition by setting the total content of the carbon black and the hydrated silica to be equal to or less than 200 parts by mass with respect to 100 parts by mass of the rubber component.

Additives conventionally blended with a rubber composition may be blended with the rubber composition of the present disclosure unless inclusion of these additives adversely affects the effect of the present disclosure as intended. Examples of the additives which may be blended in an appropriate manner with the rubber composition of the present disclosure include anti-oxidant, vulcanization accelerator, sulfur, zinc oxide, stearic acid, antiozonant, and the like, which are generally used in the rubber industry.

### (Crosslinked rubber composition)

The rubber composition of the present disclosure may be used in a crosslinked state (i.e. as a crosslinked rubber composition).
Conditions of crosslinking which the rubber composition is subjected to are not particularly restricted and a vulcanization process may be carried out under the known vulcanization conditions (e.g. at temperature of 100 °C or higher, preferably in the range of 125 °C to 200 °C, and more preferably in the range of 130 °C to 180 °C).

### (Tire)

A tire of the present disclosure is characterized in that it uses the rubber composition of the present disclosure. The rubber composition is preferably applicable to a tread among structural members of a tire. The tire using the rubber composition of the present disclosure for a tread exhibits excellently high wear resistance and low hysteresis loss.

### (Method for manufacturing a rubber composition)

A method for manufacturing a rubber composition of the present disclosure is a method for manufacturing a rubber composition, the method including blending a rubber component and a hydrated silica, wherein the method includes modifying the hydrated silica with aluminum and a surfactant prior to blending the rubber component and the hydrated silica.
It is possible to improve wear resistance, workability and low-hysteresis loss properties of the rubber composition by using the hydrated silica modified by the aluminum and the surfactant.
Other features regarding the structure/composition of the rubber composition, in the method for manufacturing the rubber composition, are the same as those described above in connection with the rubber composition.

### EXAMPLES

The present disclosure will be described in detail hereinafter by Examples, which, however, do not restrict the scope of the present invention.

### (Production examples: Hydrated silica)

Hydrated silicas A-O were prepared according to the following protocols.

### Hydrated silica A

86 L of water and 1.6 L of sodium silicate aqueous solution (SiO₂: 160g/L, mass ratio of SiO₂/Na₂O: 3.3) were charged into a jacketed stainless reaction vessel (180 L) provided with a stirrer. The mixture solution was heated at 70 °C. Na₂O concentration of the mixture solution thus prepared was 0.015 mol/L.
The same sodium silicate aqueous solution as described above and sulfuric acid (18 mol/L) were simultaneously added dropwise to the mixture solution at a flow rate of 560 mL/minute for the former and a flow rate of 25 mL/minute for the latter. Neutralization was carried out with maintaining Na₂O concentration in the reaction solution in the range of 0.005 mol/L to 0.035 mol/L by adjusting the aforementioned flow rates. The reaction solution turns/turned opaque in the midway of the neutralization reaction and becomes/became a gel-like solution, due to increase in viscosity thereof, 38 minutes after the start of neutralization. Addition of the sodium silicate aqueous solution and sulfuric acid were continued and then only the addition of the sodium silicate aqueous solution was stopped 100 minutes after the start of neutralization. Concentration of silica formed in a resulting solution was 60 g/L. The same sulfuric acid as described above was again added to the resulting solution until pH of the solution reaches/reached 3, whereby silicate slurry was obtained. The silicate slurry thus obtained was filtrated by a filter press and then rinsed with water, whereby a wet cake was obtained. The wet cake thus obtained was dried, whereby hydrated silica A was obtained.

### Hydrated silica B

The same preparation method as that of hydrated silica A was carried out until the method reaches/reached the stage where "only the addition of the sodium silicate aqueous solution was stopped 100 minutes after the start of neutralization". Then, sodium aluminate was added to the reaction solution so that a mass ratio of Al₂O₃/SiO₂ was 0.8 %. The addition of the sulfuric acid was continued until pH of the reaction solution reaches/reached 3, whereby silicate slurry was obtained.
The silicate slurry thus obtained was processed in the same manner as that of hydrated silica A, whereby hydrated silica B was obtained.

### Hydrated silica C

The same preparation method as that of hydrated silica A was carried out until the method reaches/reached the stage where "only the addition of the sodium silicate aqueous solution was stopped 100 minutes after the start of neutralization". Then, a nonionic surfactant "EMULGEN 705" (manufactured by Kao Corporation) was added to the reaction solution so that a mass ratio of the surfactant/SiO₂ was 0.5 %. The addition of the sulfuric acid was continued until pH of the reaction solution reaches/reached 3, whereby silicate slurry was obtained.
The silicate slurry thus obtained was processed in the same manner as that of hydrated silica A, whereby hydrated silica C was obtained.

### Hydrated silica D

The same preparation method as that of hydrated silica A was carried out until the method reaches/reached the stage where "only the addition of the sodium silicate aqueous solution was stopped 100 minutes after the start of neutralization". Then, a nonionic surfactant "EMULGEN 705" (manufactured by Kao Corporation) was added to the reaction solution so that a mass ratio of the surfactant/SiO₂ was 0.5 %. The addition of the sulfuric acid was continued. When pH of the reaction solution reaches/reached a range of 8.5 to 7.0, sodium aluminate was added to the reaction solution so that a mass ratio of Al₂O₃/SiO₂ was 0.8 %. The addition of the sulfuric acid was stopped when pH of the reaction solution reaches/reached 3, whereby silicate slurry was obtained.
The silicate slurry thus obtained was processed in the same manner as that of hydrated silica A, whereby hydrated silica D was obtained.

### Hydrated silica E

The same preparation method as that of hydrated silica A was carried out until the method reaches/reached the stage where "only the addition of the sodium silicate aqueous solution was stopped 100 minutes after the start of neutralization". Then, sodium aluminate and a nonionic surfactant "EMULGEN 705" (manufactured by Kao Corporation) were added to the reaction solution so that a mass ratio of Al₂O₃/SiO₂ was 0.8 % for the former and a mass ratio of the surfactant/SiO₂ was 0.5 % for the latter. The addition of the sulfuric acid was continued until pH of the reaction solution reaches/reached 3, whereby silicate slurry was obtained.
The silicate slurry thus obtained was processed in the same manner as that of hydrated silica A, whereby hydrated silica E was obtained.

### Hydrated silica F

The same preparation method as that of hydrated silica A was carried out until the method reaches/reached the stage where "whereby silicate slurry was obtained". The silicate slurry thus obtained was filtrated by a filter press and then rinsed with water, whereby a wet cake was obtained. The wet cake thus obtained was emulsified and made into a slurry again. Sodium aluminate and a nonionic surfactant "EMULGEN 705" (manufactured by Kao Corporation) were added to the emulsified slurry, with thoroughly stirring the slurry, so that a mass ratio of Al₂O₃/SiO₂ was 0.8 % for the former and a mass ratio of the surfactant/SiO₂ was 0.5 % for the latter. The pH of the mixture was adjusted, with sulfuric acid, to be within the range of 5.0 to 7.0. The resulting emulsified slurry was dried, whereby hydrated silica F was obtained.

### Hydrated silicas G-O

The same preparation method as that of hydrated silica A was carried out for each of hydrated silicas G-O until the method reaches/reached the stage where "only the addition of the sodium silicate aqueous solution was stopped 100 minutes after the start of neutralization". Then, sodium aluminate was added to the reaction solution so that a mass ratio of Al₂O₃/SiO₂ was within the range of 0.05 % to 10 % (in respect of the specific mass ratio of Al₂O₃ of each hydrated silica A-O, refer to Table 1). The addition of the sulfuric acid was continued. When pH of the reaction solution reaches/reached a range of 8.5 to 7.0, a nonionic surfactant "EMULGEN 705" (manufactured by Kao Corporation) was added to the reaction solution so that a mass ratio of the surfactant/SiO₂ was within the range of 0.03 % to 3 % (in respect of the specific mass ratio of the surfactant of each hydrated silica A-O, refer to Table 1). The addition of the sulfuric acid was stopped when pH of the reaction solution reaches/reached 3, whereby silicate slurry was obtained.
The silicate slurry thus obtained was processed in the same manner as that of hydrated silica A, whereby hydrated silica G-O was obtained.

**[Table 1]**

| | Hydrated silica | | | | | | | | | | | | | | |
|---|---|---|---|---|---|---|---|---|---|---|---|---|---|---|---|
| | A | B | C | D | E | F | G | H | I | J | K | L | M | N | O |
| BET specific surface area (m²/g) | 272 | 271 | 270 | 264 | 260 | 227 | 274 | 271 | 253 | 255 | 268 | 272 | 220 | 275 | 271 |
| CTAB specific surface area (m²/g) | 197 | 185 | 195 | 179 | 181 | 186 | 181 | 188 | 179 | 178 | 185 | 191 | 165 | 183 | 182 |
| Content of Al₂O₃ (mass ratio (%) with respect to SiO₂) | - | 0.8 | - | 0.8 | 0.8 | 0.8 | 0.8 | 0.1 | 5.0 | 5.0 | 0.2 | 0.05 | 10.0 | 0.8 | 0.8 |
| Content of surfactant (mass ratio (%) with respect to SiO₂) | - | - | 0.5 | 0.5 | 0.5 | 0.5 | 0.5 | 0.05 | 2.0 | 0.5 | 2.0 | 0.5 | 0.5 | 0.03 | 3.0 |
| When and how hydrated silica surface to be modified? | - | - | - | With surfactant first | With aluminate salt and surfactant simultaneously | With aluminate salt and surfactant simultaneously after emulsifying silica | With Al₂O₃ first | With Al₂O₃ first | With Al₂O₃ first | With Al₂O₃ first | With Al₂O₃ first | With Al₂O₃ first | With Al₂O₃ first | With Al₂O₃ first | With Al₂O₃ first |

### (Rubber composition samples 1-15)

Each of rubber composition samples was prepared by blending the respective components thereof according to the formulation shown in Table 2 and mixing and kneading the blend by the conventional method. The rubber composition sample thus prepared was then applied to tread rubber of a tire and subjected to vulcanization.
The aforementioned hydrated silicas A-O were used as the hydrated silicas blended in the rubber composition samples. The type of the hydrated silica selected for each rubber composition sample is shown in Table 3.

**[Table 2]**

| Formulation | Content |
|---|---|
| 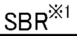 | 100 |
| Carbon 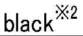 | 15 |
| 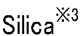 | 75 |
| Silane coupling 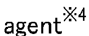 | 7 |
| Aromatic oil | 36 |
| Stearic acid | 2 |
| 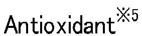 | 1 |
| Zinc white | 3 |
| Vucanization accelerator 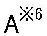 | 1 |
| Vulcanization accelerator 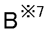 | 1 |
| Vulcanization accelerator 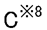 | 1 |
| Sulfur | 1.5 |

| | |
|---|---|
| The unit of content in Table 2 is parts by mass with respect to 100 parts by mass of the rubber component. *1 SBR: Styrene-butadiene rubber, "#1500" manufactured by JSR Corporation *2 "SEAST®KH(N339)" manufactured by Tokai Carbon Co., Ltd. *3 One of the hydrated silicas A-O, selected according to the hydrated silica type shown in Table 3 *4 "NXT®" manufactured by Momentive Performance Materials Inc. *5 N-(1,3-dimethylbutyl)-N'-phenyl-p-phenylenediamine or "Nocrac 6C" manufactured by Ouchi-Shinko Chemical Industrial Co., Ltd. *6 Diphenylguanidine or "Noccelar D" manufactured by Ouchi-Shinko Chemical Industrial Co., Ltd. *7 Benzothiazyl disulfide or "Noccelar DM-P" manufactured by Ouchi-Shinko Chemical Industrial Co., Ltd. *8 N-t-butyl-2-benzothiazyl sulfenamide or "Noccelar NS-P" manufactured by Ouchi-Shinko Chemical Industrial Co., Ltd. | |

### (Evaluation)

A pneumatic sample tire (size: 195/65R15) was manufactured by using each rubber composition sample according to the conventional method.
Each rubber composition sample and each sample tire made therefrom (which share the same sample No.) were then subjected to the following performance tests. Each value of the respective performance types shown in Table 3 represents an index relative to the value of relevant Comparative Example 1 being "100".

### (1) Workability (Viscosity in unvulcanized state)

A Mooney viscosity test was carried out for each of the rubber composition samples prior to vulcanization, according to JIS K 6300-1 at 100 °C, so that viscosity in the unvulcanized state of the rubber composition sample was measured. The evaluation results based on the measurements are shown in Table 3.
Each value of viscosity in the unvulcanized state in Table 3 represents an index relative to the relevant value of rubber composition sample No. 1 being "100". The smaller index value of viscosity in the unvulcanized state represents the lower viscosity and thus the better workability.

### (2) Wear resistance (Remaining groove depth)

Wear resistance of each sample tire (size: 195/65R15) was evaluated by: driving a vehicle by 20,000 km in a state where the tire was mounted thereon; and then measuring a remaining groove depth in the sample tire. The evaluation results based on the measurements are shown in Table 3.
Each value of remaining groove depth in Table 3 represents an index relative to the remaining groove depth of sample tire No. 1 being "100". The larger index value of remaining groove depth represents the higher or better wear resistance.

### (3) Low-hysteresis loss properties (Rolling resistance)

Rolling resistance at 80 km/hour was measured for each sample tire (size: 195/65R15) by using an indoor single-axis drum tester for measuring rolling resistance. The evaluation results based on the measurements are shown in Table 3.
Specifically, the rolling resistance value thus measured for each sample tire was first converted to an inverse number thereof. On this basis, each value of rolling resistance in Table 3 represents an index relative to the relevant inverse number of rolling resistance of sample tire No. 1 being "100". The larger index value of the inverse number represents the smaller rolling resistance and thus better low-hysteresis loss properties.

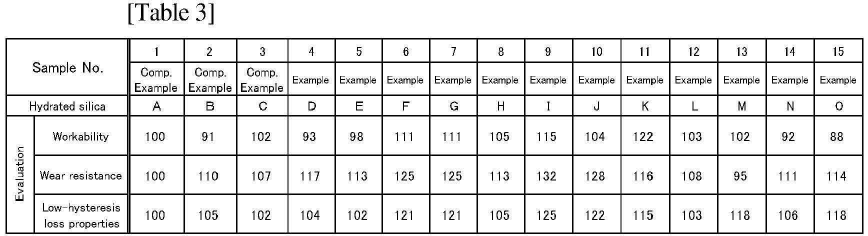

It is understood from the results shown in Table 3 that the samples according to the present disclosure or the "Examples" unanimously exhibit/exhibited satisfactory results in a well-balanced manner for at least two of workability, wear resistance and low-hysteresis loss properties.
In contrast, each of the "Comparative Examples" exhibits/exhibited a poorer result than "Examples" in at least one of the three performance types.

### INDUSTRIAL APPLICABILITY

According to the rubber composition of the present disclosure, it is possible to provide a rubber composition having high wear resistance and being excellent in both workability and low-hysteresis loss properties, a method for manufacturing the rubber composition, and a tire being excellent in wear resistance and low-hysteresis loss properties.

## Claims

1. A rubber composition comprising a rubber component and a hydrated silica, wherein: the hydrated silica contains aluminum and a surfactant.

2. A method for manufacturing a rubber composition, the method including blending a rubber component and a hydrated silica, wherein:
the method includes modifying the hydrated silica with aluminum and a surfactant prior to blending the rubber component and the hydrated silica.

3. The method for manufacturing a rubber composition of claim 2, wherein the modifying the hydrated silica includes modifying a surface of the hydrated silica with the surfactant after the surface of the hydrated silica has been reacted with the aluminum.

4. The method for manufacturing a rubber composition of claim 2, wherein the modifying the hydrated silica with the aluminum is modifying the hydrated silica with an aluminate salt.

5. The method for manufacturing a rubber composition of claim 4, wherein a content of the aluminate salt is within the range of 0.1 parts by mass to 5.0 parts by mass with respect to 100 parts by mass of the hydrated silica.

6. The method for manufacturing a rubber composition of any of claims 2 to 5, wherein the surfactant is a nonionic surfactant or a cationic surfactant.

7. The method for manufacturing a rubber composition of any of claims 2 to 6, wherein a content of the surfactant is within the range of 0.05 parts by mass to 2.0 parts by mass with respect to 100 parts by mass of the hydrated silica.

8. The method for manufacturing a rubber composition of any of claims 4 to 7, wherein a ratio of a content of the aluminate salt with respect to a content of the surfactant is in the range of 0.1 to 10.0.

9. The method for manufacturing a rubber composition of any of claims 2 to 8, wherein a content of the hydrated silica is within the range of 10 parts by mass to 150 parts by mass with respect to 100 parts by mass of the rubber component.

10. A tire, using the rubber composition of claim 1.
